# EUROPÄISCHE PATENTSCHRIFT

(11) **EP 3 574 469 B1**
(45) Veröffentlichungstag und Bekanntmachung des Hinweises auf die Patenterteilung: **17.04.2024**
(21) Anmeldenummer: 18700192.0
(22) Anmeldetag: 08.01.2018
(51) Int. Cl.: G06Q 50/40, G06Q 10/0631

(54) **VERFAHREN ZUM BEREITSTELLEN EINES KONTEXTABHÄNGIG KONFIGURIERTEN FAHRZEUGS**
METHOD FOR PROVIDING A CONTEXT DEPENDENT CONFIGURED VEHICLE
PROCÉDÉ DE FOURNITURE D'UN VÉHICULE EN CONFIGURATION CONTEXTUELLE

(30) Priorität: 25.01.2017 DE 102017201130
(43) Veröffentlichungstag der Anmeldung: 04.12.2019
(73) Patentinhaber: Audi AG, 85045 Ingolstadt (DE)
(72) Erfinder: HAINZLMAIER, Andre, 85290 Geisenfeld (DE); HELLENTHAL, Berthold, 90596 Schwanstetten (DE); BLUM, André, 85080 Gaimersheim (DE)
(86) Internationale Anmeldenummer: PCT/EP2018/050341
(87) Internationale Veröffentlichungsnummer: WO 2018/137915

(56) Entgegenhaltungen:
- US-A1- 2015 339 928
- US-A1- 2016 173 568
- Anonymous: "Autocars and Accessories - Wikipedia", , 29 July 2016 (2016-07-29), XP055910826, Retrieved from the Internet: URL:https://de.wikipedia.org/w/index.php?t itle=Autocars_and_Accessories&oldid=156548 853#Einzelnachweise [retrieved on 2022-04-08]
- Anonymous: "Rinspeed - Wikipedia", , 27 February 2021 (2021-02-27), XP055910831, Retrieved from the Internet: URL:https://de.wikipedia.org/wiki/Rinspeed #cite_note-14 [retrieved on 2022-04-08]
- N.N.: "Vision URBANETIC - The mobility of the future", , 7 January 2020 (2020-01-07), Retrieved from the Internet: URL:https://mercedes-benz.com/en/vehicles/ transporter/vision-urbanetic-the-mobility- of-the-future/ [retrieved on 2022-04-08]

## Beschreibung

Die vorgestellte Erfindung betrifft ein Verfahren zum Bereitstellen eines kontextabhängig konfigurierten Fahrzeugs und ein Transportsystem.

Um eine Person mit einem Fahrzeug zu transportieren, können sogenannte "Car-Sharing-Modelle" eingesetzt werden, bei denen die Person ein Fahrzeug auf einer Internetplattform auswählen und mieten kann. Dazu sind aufwendige Auswahl- und Buchungsschritte erforderlich, bevor die Person ein Fahrzeug verwenden kann.

Weiterhin sind internetbasierte Verkaufsplattformen bekannt, auf denen sich ein Nutzer über Produkte aller Art informieren und diese ggf. erwerben kann.

Die US-amerikanische Druckschrift US 2015 03 56 665 A1 offenbart ein Verfahren, bei dem einem Nutzer eines Fahrzeugs auf einer Anzeigeeinheit Angebote eines Händlers dargeboten werden. Dabei können die Angebote in Abhängigkeit einer aktuellen Position des Fahrzeugs verändert werden. Weiterhin kann dabei vorgesehen sein, dass ein aus dem Fahrzeug heraus erworbenes Produkt hergestellt oder bereitgestellt wird, während der Nutzer sich mit dem Fahrzeug dem Händler nähert.

In der deutschen Druckschrift DE 10 2015 212 493 A1 wird ein Verfahren zum Bereitstellen von gekauften Waren in einem Kofferraum eines Fahrzeugs offenbart, bei dem der Kofferraum mittels eines Codes von einem Boten geöffnet wird.

Ein Verfahren zum automatischen Bewegen eines Fahrzeugs von einem Parkplatz zu einem Verladeplatz ist in der deutschen Druckschrift DE 10 2015 202 468 A1 offenbart.

Aus der US 2016 / 173 568 A1 sind Verfahren und Systeme zum Kommunizieren mit einem Server eines Cloud-Systems bekannt, das zum Verwalten des Zugriffs auf ein Benutzerkonto mit einem Profil verwendet wird, das Einstellungen für ein Fahrzeug enthält. Das Rechensystem des Fahrzeugs ist dazu konfiguriert, eine oder mehrere Einstellungen für das Fahrzeug zu implementieren, wenn das Profil auf dem Fahrzeug aktiv gemacht wird.

Die US 2015 / 339 928 A1 betrifft Technologien zum Betreiben einer Flotte von autonomen Fahrzeugen. Ein autonomes Fahrzeug kann aus der Flotte von autonomen Fahrzeugen ausgewählt werden, um einen Taxidienst teilweise basierend auf einer Verfügbarkeit des autonomen Fahrzeugs und einer Nähe zwischen dem autonomen Fahrzeug und dem aktuellen Standort der mobilen Vorrichtung durchzuführen. Dem autonomen Fahrzeug können Anweisungen bereitgestellt werden, um den Taxidienst gemäß der Anforderung auszuführen.

Vor diesem Hintergrund war es eine Aufgabe der vorliegenden Erfindung, ein Fahrzeug zum Transport eines Kunden bereitzustellen, das nach den Vorlieben des Kunden konfiguriert ist, wobei das Konfigurieren auch den Austausch physischer Komponenten des Fahrzeugs umfasst.

Zur Lösung der voranstehend genannten Aufgabe wird ein Verfahren zum Transportieren eines Nutzers in einem abhängig von einem Kontext des Nutzers konfigurierten autonom fahrenden Fahrzeug bereitgestellt. Das Verfahren umfasst das Bereitstellen eines kontextabhängig konfigurierten autonom fahrenden Fahrzeugs, bei dem das autonom fahrende Fahrzeug anhand von an einen Server übermittelten Angaben zu einem Kontext des Nutzers ausgewählt und durch eine Anpassung mindestens einer Komponente ausgewählt aus Infotainmentsystem, Beleuchtungssystem, Beduftungssystem, Karosserie, Motorisierung, Fahrzeugtyp und Fahrzeugdesign konfiguriert wird. Dabei wird anhand einer Zuordnungstabelle, die jeweiligen Steuerbefehlen des Nutzers jeweilige Konfigurationsparameter zuordnet, ein Chassis und/oder eine Karosserie und/oder ein Einstellungsprofil jeweiliger Innenraumkomponenten des Fahrzeugs ausgewählt und das Fahrzeug mit dem ausgewählten Chassis und/oder der ausgewählten Karosserie und/oder dem ausgewählten Einstellungsprofil jeweiliger Innenraumkomponenten des Fahrzeugs unter Verwendung einer automatischen Konfigurationsvorrichtung, die dazu verwendet wird, Komponenten des Fahrzeugs, wie bspw. dessen Karosserie oder dessen Antrieb, auszutauschen, konfiguriert. Der Kontext des Nutzers wird anhand von durch den Nutzer mittels eines auf einer Recheneinheit ausgeführten Programms bereitgestellten Steuerbefehlen ermittelt. Ausgestaltungen der vorgestellten Erfindung ergeben sich aus der Beschreibung und den abhängigen Patentansprüchen.

Die vorliegende Erfindung dient insbesondere zum Bereitstellen eines Fahrzeugs, das gemäß einem Kontext eines Nutzers konfiguriert wird. Dabei ist vorgesehen, dass der Kontext des Nutzers anhand von durch den Nutzer mittels eines auf einer Recheneinheit ausgeführten Programms bereitgestellten Steuerbefehlen ermittelt wird. Dies bedeutet, dass der Kontext des Nutzers anhand von in dem Programm bzw. mittels des Programms bereitgestellten Steuerbefehlen ermittelt wird, indem bspw. von dem Nutzer mittels des Programms betrachtete virtuelle Objekte oder ausgewählte, d. h. in einer Liste, wie bspw. einem digitalen Einkaufskorb abgelegte, virtuelle Objekte mittels einer das Programm ausführenden Recheneinheit erfasst werden. Es ist insbesondere vorgesehen, dass jeweiligen virtuellen Objekten Konfigurationsparameter zugeordnet werden, die eine exakte Konfiguration eines Fahrzeugs angeben. So kann bspw. vorgesehen sein, dass einem virtuellen Objekt "Prada Handtasche" die Konfigurationsparameter "Ledergeruch", "gedämmtes Licht" und "luxuriöse Ausstattung" zugeordnet sind. Anhand der Konfigurationsparameter kann ein zum Transport des Nutzers vorgesehenes Fahrzeug dem virtuellen Objekt entsprechend konfiguriert werden.

Weiterhin ist vorgesehen, dass in Abhängigkeit des Kontexts des Nutzers ein Fahrzeug zum Transportieren eines Nutzers verwendet wird. Dies bedeutet, dass bei einer Eingabe eines bestimmten Steuerbefehls des Nutzers mittels des erfindungsgemäß vorgesehenen Programms, ein Fahrzeug zum Transportieren des Nutzers konfiguriert und entsprechend zu dem Nutzer bspw. unter Verwendung eines autonomen Fahrassistenten, gesendet wird, um den Nutzer bspw. zu einem in dem Programm bzw. mittels des Programms angegebenen vorgegebenen Ort zu transportieren. Dabei ist vorgesehen, dass das zum Transportieren des Nutzers gewählte Fahrzeug in Abhängigkeit des aktuellen Kontexts des Nutzers, d. h. mittels jeweiliger durch den Kontext des Nutzers ermittelter Konfigurationsparameter, konfiguriert wird.

Unter einem Kontext eines Nutzers ist innerhalb der vorliegenden Offenbarung ein Muster an mittels des auf der erfindungsgemäß vorgesehenen Recheneinheit ausgeführten Programms bereitgestellten Steuerbefehlen zu verstehen. Dabei können jeweilige von dem Nutzer mittels des auf der erfindungsgemäß vorgesehenen Recheneinheit ausgeführten Programms bereitgestellte Steuerbefehle mit bspw. in einer Tabelle vorgegebenen Mustern an Steuerbefehlen, die jeweiligen Konfigurationsparametern zugeordnet sind, abgeglichen werden. So kann sich ein Kontext eines Nutzers, der bspw. mittels des Programms, wie bspw. einem Browser, Sportreifen für ein Fahrzeug betrachtet, durch die von dem Nutzer beim Betrachten bzw. Auswählen der Sportreifen bereitgestellten Steuerbefehle ergeben und zur Auswahl von dem Kontext des Nutzers entsprechenden Konfigurationsparametern zur Konfiguration eines Fahrzeugs verwendet werden.

Es ist gemäß einer möglichen Ausführungsform des vorgestellten Verfahrens vorgesehen, dass die von dem Nutzer zum Betrachten bzw. Auswählen der Sportreifen bereitgestellten Steuerbefehle einem Konfigurationsparameter "sportliche Motorisierung" zugeordnet sind, so dass ein zum Transport des Nutzers eingesetztes Fahrzeug mit einer sportlichen bzw. leistungsstarken Motorisierung konfiguriert wird, wenn ein dem Betrachten bzw. Auswählen der Sportreifen entsprechendes Muster an Steuerbefehlen von dem Programm erfasst bzw. an den erfindungsgemäß vorgesehenen Server gemeldet wird.

Unter Angaben zu einem Kontext eines Nutzers sind im Kontext der vorliegenden Erfindung Informationen zu verstehen, die einen Kontext des Nutzers, d. h. jeweilige von dem Nutzer bereitgestellte Steuerbefehle oder in einem digitalen Profil des Nutzers gespeicherte Informationen, beschreiben. Derartige Angaben können aus von einem Nutzer bereitgestellten Steuerbefehlen abgeleitet werden, indem bspw. bestimmte Muster an Steuerbefehlen zu einer Angabe zusammengefasst werden. Selbstverständlich können jeweilige Angaben auch direkt jeweilige von einem Nutzer bereitgestellte Steuerbefehle und/oder aus einem digitalen Profil des Nutzers ausgelesene Informationen umfassen.

In einer weiteren möglichen Ausgestaltung des vorgestellten Verfahrens ist vorgesehen, dass die Angaben zu dem Kontext des Nutzers an den Server über eine sichere Verbindung übertragen werden.

Um jeweilige mittels des erfindungsgemäß vorgesehenen Programms erfasste Steuerbefehle, die der Nutzer bereitstellt, an den erfindungsgemäß vorgesehenen Server zu übertragen, ist insbesondere vorgesehen, dass das Programm mit dem Server über eine vorgegebene Schnittstelle, die bspw. über eine gesicherte Verbindung realisiert ist, kommuniziert. Selbstverständlich kann zur Kommunikation des Programms mit dem Server auch jede weitere technisch geeignete Schnittstelle verwendet werden.

In einer weiteren möglichen Ausgestaltung des vorgestellten Verfahrens ist vorgesehen, dass der Kontext des Nutzers anhand von in einem digitalen Profil des Nutzers gespeicherten Nutzerdaten ermittelt wird.

Um einen Kontext eines Nutzers und, dadurch bedingt, Konfigurationsparameter zur Konfiguration eines Fahrzeugs zu bestimmen, können sowohl von dem Nutzer bereitgestellte Steuerbefehle, d. h. bspw. mittels einer Computermaus durchgeführte "Klicks" oder auf einer berührungsempfindlichen Oberfläche vorgenommene Bedienungsgesten ausgewertet werden. Weiterhin kann vorgesehen sein, dass in einem digitalen Profil des Nutzers gesammelte Informationen beim Bestimmen jeweiliger Konfigurationsparameter berücksichtigt werden. Dazu können bspw. Angaben über ein Einkaufsverhalten oder einen aktuellen Status des Nutzers aus dem digitalen Profil ausgelesen werden. Die aus dem digitalen Profil ausgelesenen Informationen können bspw. auf Grundlage einer Zuordnungstabelle jeweiligen Konfigurationsparametern zugeordnet werden. Unter einem digitalen Profil ist im Kontext der vorliegenden Patentanmeldung eine Anzahl Dateien bzw. Listen zu verstehen, in denen Eigenschaften und bevorzugte Einstellungsparameter eines Nutzers für bspw. ein Fahrzeug oder das erfindungsgemäß vorgesehene Programm gespeichert sind. Ein digitales Profil kann von einem Nutzer selbst und/oder von einem Programm verändert werden.

Es ist ferner denkbar, dass zur Zuordnung jeweiliger Kontextinformationen des Nutzers, d. h. jeweiliger Steuerbefehle und/oder Profilinformationen, zu jeweiligen Konfigurationsparametern, ein maschineller Lerner eingesetzt wird, der bspw. anhand von mittels Testnutzern bereitgestellten Trainingsdaten über einen jeweiligen Nutzer gesammelte Kontextinformationen jeweiligen Konfigurationsparametern zuordnet. Durch die Verwendung eines maschinellen Lerners reduziert sich ein Wartungsaufwand für neue bzw. zusätzlich verfügbare Konfigurationsparameter erheblich, da auf ein Bereitstellen fester Zuordnungsregeln verzichtet werden kann.

In einer weiteren möglichen Ausgestaltung des vorgestellten Verfahrens ist vorgesehen, dass das Fahrzeug mittels einer Zuordnungstabelle konfiguriert wird, die jeweilige von dem Nutzer betrachtete und/oder ausgewählte virtuelle Objekte und/oder jeweilige Nutzerdaten aus dem digitalen Profil des Nutzers jeweiligen Konfigurationsparametern zuordnet.

Eine Zuordnung von in einem digitalen Profil eines Nutzers gespeicherten Informationen und/oder eine Zuordnung von durch den Nutzer bereitgestellten Steuerbefehlen bzw. entsprechend abgeleiteter Angaben, zu jeweiligen Konfigurationsparametern, kann in einer Zuordnungstabelle fest vorgegeben werden. Eine solche Zuordnungstabelle kann von einem Verwalter, wie bspw. einem Händler, bei Bedarf aktualisiert werden, so dass bspw. neu verfügbare Konfigurationsparameter einem Verhalten eines Nutzers zugeordnet werden.

In dem vorgestellten Verfahren ist vorgesehen, dass das Fahrzeug durch eine Anpassung mindestens einer Komponente der folgenden Liste an Komponenten oder einer Kombination daraus konfiguriert wird: Infotainmentsystem, Beleuchtungssystem, Beduftungssystem, Karosserie, Motorisierung, Fahrzeugtyp und Fahrzeugdesign.

Es ist gemäß dem vorgestellten Verfahren insbesondere vorgesehen, dass ein zum Transport eines Nutzers vorgesehenes Fahrzeug in Abhängigkeit von Angaben zu einem Kontext, insbesondere einem aktuellen Kontext des Nutzers konfiguriert wird. Dazu können jeweilige Komponenten des Fahrzeugs, bspw. über eine mit dem Fahrzeug in kommunikativer Verbindung stehende Konfigurationseinheit, in einen den Angaben zu dem Kontext des Nutzers entsprechenden Zustand geschaltet werden. Weiterhin ist denkbar, dass jeweilige Komponenten des Fahrzeugs in Abhängigkeit der Angaben zu dem Kontext des Nutzers ausgewählt werden und das Fahrzeug mittels der ausgewählten Komponenten entsprechend verändert wird. Dies bedeutet, dass bspw. eine Innenausstattung des Fahrzeugs in Abhängigkeit eines von einem Nutzer mittels des erfindungsgemäß vorgesehenen Programms betrachteten bzw. ausgewählten virtuellen Objekts ausgewählt wird. Dabei können beliebige Komponenten des Fahrzeugs verändert und/oder ausgetauscht werden, um das Fahrzeug dem Kontext des Nutzers, d. h. jeweiligen Angaben zu dem Kontext des Nutzers entsprechend zu konfigurieren. Insbesondere ist vorgesehen, dass der Nutzer mit dem Kontext des Nutzers entsprechenden Informationen aus Anzeigeeinheiten und/oder Audiosystemen und/oder Beduftungseinrichtungen des Fahrzeugs versorgt wird.

In einer weiteren möglichen Ausgestaltung des vorgestellten Verfahrens ist vorgesehen, dass das Fahrzeug in Abhängigkeit eines von dem Nutzer mittels des Programms bereitzustellenden Direktbefehls konfiguriert wird.

Es ist denkbar, dass das erfindungsgemäß vorgesehene Fahrzeug mittels eines Direktbefehls konfiguriert wird. Dies bedeutet, dass das Fahrzeug beim Bereitstellen eines Direktbefehls, d. h. eines Steuerbefehls, der direkt zu einer Aktion, wie bspw. einem Konfigurationsvorgang des Fahrzeugs führt, entsprechend zu jeweiligen Angaben zu einem Kontext des Nutzers konfiguriert und zum Transport des Nutzers verwendet wird. Entsprechend kann der Nutzer ein Fahrzeug mittels des Direktbefehls, der bspw. als "1 click to physical product" bezeichnet werden kann, dazu konfigurieren, den Nutzer zu einem Ort, der bspw. innerhalb einer Benutzerfläche des erfindungsgemäß vorgesehenen Programms, d. h. in dem Programm, ausgewählt werden kann, zu transportieren. Dabei ist vorgesehen, dass das Fahrzeug in Abhängigkeit von Angaben zu einem Kontext des Nutzers konfiguriert wird und bspw. ein einem von dem Nutzer in dem Programm betrachteten virtuellen Objekt entsprechendes Farbschema in einem Innenraum des Fahrzeugs generiert und dem Nutzer über eine Anzeigeeinheit Informationen über das virtuelle Objekt bereitstellt.

Ein Direktbefehl kann von einem Nutzer mittels des erfindungsgemäß vorgesehenen Programms bereitgestellt werden, so dass der Nutzer bei Bedarf eine Konfiguration eines Fahrzeugs gemäß dem vorgestellten Verfahren starten und mittels eines entsprechend konfigurierten Fahrzeugs transportiert werden kann. Ein Direktbefehl ermöglicht dem Nutzer bspw. einen Transport zu einem Ort, an dem der Nutzer ein reales Produkt erleben und testen kann. Der Direktbefehl entlastet den Nutzer von aufwendigen Planungen zur Organisation seines Transports. Dazu ist insbesondere vorgesehen, dass ein autonom fahrendes Fahrzeug dazu konfiguriert wird, zu einem Ort des Nutzers zu fahren und den Nutzer zu einem Ort zu transportieren, der einem aktuellen Kontext des Nutzers zugeordnet ist, wenn der Nutzer einen entsprechenden Direktbefehl, der bspw. als Steuersymbol auf einer Internetseite angeboten wird, aktiviert bzw. bereitstellt.

In einer weiteren möglichen Ausgestaltung des vorgestellten Verfahrens ist vorgesehen, dass der Direktbefehl mittels einer einzigen Eingabe in das auf der Recheneinheit ausgeführte Programm bereitgestellt wird.

Ein Direktbefehl, der direkt zu einer Konfiguration eines Fahrzeugs gemäß jeweiligen Angaben zu einem insbesondere aktuellen Kontext eines Nutzers führt, zeichnet sich insbesondere dadurch aus, dass dieser mit lediglich einer einzigen Eingabe, wie bspw. einem "Click" mit einer Computermaus oder einer einzelnen Bediengeste auf einer berührungsempfindlichen Oberfläche zu aktivieren bzw. bereitzustellen ist.

Ferner betrifft die vorgestellte Erfindung ein Transportsystem zum kontextabhängigen Transport eines Nutzers, mit einer Recheneinheit, auf der ein Programm ausgeführt wird, einem Server, der mit der Recheneinheit in kommunikativer Verbindung steht und einer Anzahl Fahrzeuge, wobei der Server dazu konfiguriert ist, anhand von durch die Recheneinheit an den Server übermittelten Angaben zu einem Kontext eines Nutzers ein Fahrzeugs aus der Anzahl Fahrzeuge auszuwählen, durch eine Anpassung mindestens einer Komponente ausgewählt aus Infotainmentsystem, Beleuchtungssystem, Beduftungssystem, Karosserie, Motorisierung, Fahrzeugtyp und Fahrzeugdesign anhand einer Zuordnungstabelle, die jeweiligen Steuerbefehlen des Nutzers jeweilige Konfigurationsparameter zuordnet, ein Chassis und/oder eine Karosserie mit einer auf den Kontext des Nutzers abgestimmten Innenausstattung auszuwählen und das autonom fahrende Fahrzeug mit dem ausgewählten Chassis und/oder der ausgewählten Karosserie unter Verwendung einer automatischen Konfigurationsvorrichtung, die dazu verwendet wird, Komponenten des Fahrzeugs, wie bspw. dessen Karosserie oder dessen Antrieb, auszutauschen, zu konfigurieren und zum Transport des Nutzers zu verwenden, und wobei das Programm dazu konfiguriert ist, den Kontext des Nutzers anhand von durch den Nutzer mittels eines auf einer Recheneinheit ausgeführten Programms bereitgestellten Steuerbefehlen zu ermitteln.

Das vorgestellte Transportsystem dient insbesondere zur Durchführung des vorgestellten Verfahrens.

Es ist insbesondere vorgesehen, dass das erfindungsgemäße Transportsystem eine Flotte an Fahrzeugen umfasst, die von einer zentralen Verwaltungseinheit in Form eines Servers verwaltet und konfiguriert werden. Die Verwaltungseinheit steuert ein jeweiliges Fahrzeug der Flotte direkt an und übermittelt dem jeweiligen Fahrzeug bspw. Informationen über ein einzustellendes Innenraumprogramm, das in einem Innenraum eines Fahrzeugs angeordnete Komponenten, wie bspw. Anzeigeeinheiten, Audiosysteme und Duftgeneratoren, gemäß in Abhängigkeit von Angaben zu einem Kontext eines Nutzers ermittelter Konfigurationsparameter steuert. Weiterhin steht die Verwaltungseinheit mit einem Konfigurationssystem in Verbindung, das dazu verwendet wird, Komponenten eines Fahrzeugs, wie bspw. dessen Karosserie oder dessen Antrieb, auszutauschen.

Erfindungsgemäß ist vorgesehen, dass die Verwaltungseinheit und das Konfigurationssystem in Abhängigkeit von Angaben zu einem Kontext eines jeweiligen zu transportierenden Nutzers gesteuert werden.

Es ist vorgesehen, dass das Fahrzeug ein autonom fahrendes Fahrzeug ist und der Server dazu konfiguriert ist, anhand einer Zuordnungstabelle, die jeweiligen Steuerbefehlen des Nutzers jeweilige Konfigurationsparameter zuordnet, ein Chassis und/oder eine Karosserie und/oder ein Einstellungsprofil jeweiliger Innenraumkomponenten des Fahrzeugs auszuwählen und das Fahrzeug mit dem ausgewählten Chassis und/oder der ausgewählten Karosserie und/oder dem ausgewählten Einstellungsprofil jeweiliger Innenraumkomponenten des Fahrzeugs unter Verwendung einer automatischen Konfigurationsvorrichtung zu konfigurieren.

Mittels verschiedener Einstellungsprofile für jeweilige Innenraumkomponenten eines Fahrzeugs können einem Nutzer, je nach seinem Kontext, verschiedene Erlebnisräume angeboten werden, indem bspw. Audio- und/oder Videosysteme des Fahrzeugs dazu konfiguriert werden, eine zu dem Kontext des Nutzers passende Klang- und/oder Farbkulisse, bereitzustellen. Dies bedeutet, dass bspw. eine zu einem von dem Nutzer mittels des erfindungsgemäß vorgesehenen Programms vorgegebenen Steuerbefehl passende bzw. abgestimmte Klang- und/oder Farbkulisse aus bspw. einer Liste ausgewählt und an dem Fahrzeug eingestellt wird.

Weitere Vorteile und Ausgestaltungen ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

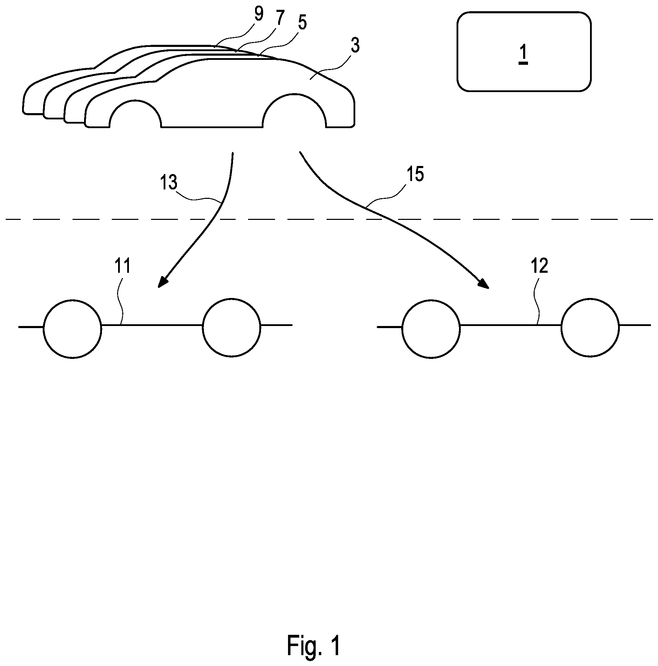

Figur 1 zeigt eine schematische Darstellung einer Konfiguration eines Fahrzeugs gemäß einer möglichen Ausgestaltung des vorgestellten Verfahrens.

In Figur 1 ist ein Konfigurationssystem 1 dargestellt, mittels dessen ein Fahrzeug gemäß einem Kontext eines Nutzers konfiguriert wird, wenn der Nutzer einen entsprechenden Direktbefehl aktiviert. Dies bedeutet, dass ein Kontext des Nutzers erfasst wird, indem von dem Nutzer mittels eines Programms, wie bspw. einem Browser bereitgestellte Steuerbefehle in Form von "Klicks" ausgewertet werden. Anhand der von dem Nutzer bereitgestellten Steuerbefehle werden über eine Zuordnungstabelle Konfigurationsparameter bestimmt, mittels derer das Konfigurationssystem 1 das Fahrzeug konfiguriert. Dazu wählt das Konfigurationssystem 1 eine Karosserie 3, 5, 7, 9 mit einer jeweiligen auf den Kontext des Nutzers abgestimmten Innenausstattung, d. h. einen sogenannten "Hut" für das Fahrzeug, und kombiniert eine Karosserie 3, 5, 7, 9 mit einem Chassis 11 oder 12 wie durch Pfeile 13 und 15 angedeutet. Bei dem Chassis 11 kann es sich bspw. um eine Basis-Mobilitätsplattform handeln, d. h. um ein Fahrgestell mit einer vorgegebenen Grundstruktur. Ferner kann es ich bei dem Chassis 12 um eine Individualstruktur handeln, die speziell an Bedürfnisse des Nutzers angepasst ist und bspw. anhand der Zuordnungstabelle ausgewählt bzw. konfiguriert wird. Sowohl das Chassis 11 als auch das Chassis 12 können mit Karosserien 3, 5, 7 oder 9 kombiniert werden. Dabei weist bspw. Karosserie 5 eine sportliche Ausstattung, Karosserie 3 eine luxuriöse Ausstattung, Karosserie 7 eine puristische Ausstattung und Karosserie 9 eine individuell zu konfigurierende Ausstattung auf.

Bspw. ist gemäß der Zuordnungstabelle vorgesehen, dass, wenn der Nutzer ein virtuelles Objekt, wie bspw. ein Produkt aus einer Kategorie "Sportzubehör" betrachtet und auswählt, d. h. bspw. in einer Einkaufsliste speichert, ein Chassis 12 mit einer sportlichen Karosserie 5 ausgestattet wird, wenn der Nutzer ein Fahrzeug ordert. Um das Fahrzeug zu ordern, kann der Nutzer ein Steuersymbol, das einen Direktbefehl auslöst, aktivieren. Entsprechend wird bzw. werden, nachdem der Nutzer das Steuersymbol für den Direktbefehl aktiviert hat, ein Kontext des Nutzers, d. h. jeweilige von dem Programm erfasste und von dem Nutzer bereitgestellte Steuerbefehle ausgewertet. Auf Grundlage der Auswertung des Kontexts des Nutzers, d. h. entsprechender aus dem Kontext des Nutzers abgeleiteter Angaben zu dem Kontext des Nutzers, werden entsprechende Konfigurationsparameter ausgewählt. Anschließend wird das Fahrzeug entsprechend den Konfigurationsparametern konfiguriert. Sobald das Fahrzeug konfiguriert ist, wird das Fahrzeug zu einer aktuellen Position des Nutzers gesendet, um den Nutzer abzuholen und bspw. zu einer Vertretung eines Händlers für Sportzubehör zu transportieren. Auf seinem Weg zu dem Händler wird der Nutzer mit Informationen über ein von ihm ausgewähltes Produkt versorgt. Um den Nutzer auf das von ihm ausgewählte Produkt einzustimmen, ist eine Farbwahl im Inneren des Fahrzeugs an ein Farbschema einer Marke eines von dem Nutzer ausgewählten Produkts angepasst. Dazu wurden die Konfigurationsparameter des Farbschemas des Fahrzeugs mittels einer Zuordnungstabelle, die die von dem Nutzer zur Auswahl des Produkts bereitgestellten Steuerbefehle jeweiligen Konfigurationsparametern zuordnet, angepasst. Dabei kann die Zuordnungstabelle auch Informationen darüber umfassen, welche Konfigurationsparameter priorisiert zu verwenden sind, wenn mehrere konkurrierende Konfigurationsparameter ermittelt werden.

## Patentansprüche

1. Verfahren zum Transportieren eines Nutzers in einem abhängig von einem Kontext des Nutzers konfigurierten autonom fahrenden Fahrzeug, umfassend das Bereitstellen eines kontextabhängig konfigurierten autonom fahrenden Fahrzeugs, bei dem das autonom fahrende Fahrzeug anhand von an einen Server übermittelten Angaben zu einem Kontext des Nutzers ausgewählt und durch eine Anpassung mindestens einer Komponente ausgewählt aus Infotainmentsystem, Beleuchtungssystem, Beduftungssystem, Karosserie, Motorisierung, Fahrzeugtyp und Fahrzeugdesign konfiguriert wird, wobei anhand einer Zuordnungstabelle, die jeweiligen Steuerbefehlen des Nutzers jeweilige Konfigurationsparameter zuordnet, ein Chassis (11, 12) und/oder eine Karosserie (3, 5, 7, 9) und/oder ein Einstellungsprofiljeweiliger Innenraumkomponenten des Fahrzeugs ausgewählt und das Fahrzeug mit dem ausgewählten Chassis (11, 12) und/oder der ausgewählten Karosserie (3, 5, 7, 9) und/oder dem ausgewählten Einstellungsprofiljeweiliger Innenraumkomponenten des Fahrzeugs unter Verwendung einer automatischen Konfigurationsvorrichtung, die dazu verwendet wird, Komponenten des Fahrzeugs, wie bspw. dessen Karosserie (3, 5, 7, 9) oder dessen Antrieb, auszutauschen, konfiguriert wird, und wobei der Kontext des Nutzers anhand von durch den Nutzer mittels eines auf einer Recheneinheit ausgeführten Programms bereitgestellten Steuerbefehlen ermittelt wird.

2. Verfahren nach Anspruch 1, bei dem die Angaben zu dem Kontext des Nutzers an den Server über eine sichere Verbindung übertragen werden.

3. Verfahren nach Anspruch 1 oder 2, bei dem als Programm ein Internetbrowser gewählt wird und der Kontext des Nutzers anhand von durch den Nutzer in einer Liste abgelegten virtuellen Objekten ermittelt wird.

4. Verfahren nach einem der voranstehenden Ansprüche, bei dem der Kontext des Nutzers anhand von in einem digitalen Profil des Nutzers gespeicherten Nutzerdaten ermittelt wird.

5. Verfahren nach Anspruch 3 oder 4, bei dem das Fahrzeug mittels einer Zuordnungstabelle konfiguriert wird, die jeweilige von dem Nutzer betrachtete und/oder ausgewählte virtuelle Objekte und/oder jeweilige Nutzerdaten aus dem digitalen Profil des Nutzers jeweiligen Konfigurationsparametern zuordnet.

6. Verfahren nach einem der voranstehenden Ansprüche, bei dem das Fahrzeug in Abhängigkeit eines von dem Nutzer mittels des Programms bereitzustellenden Direktbefehls konfiguriert wird.

7. Verfahren nach Anspruch 6, bei dem der Direktbefehl mittels einer einzigen Eingabe in das auf der Recheneinheit ausgeführte Programm bereitgestellt wird.

8. Verfahren nach einem der voranstehenden Ansprüche, bei dem als Programm ein Browser gewählt wird, auf dem eine Internetpräsenz eines Unternehmens dargestellt wird und das Fahrzeug dazu konfiguriert wird, den Nutzer von seiner aktuellen Position zu einer Vertretung des Unternehmens zu transportieren.

9. Transportsystem zum kontextabhängigen Transport eines Nutzers, mit einer Recheneinheit, auf der ein Programm ausgeführt wird, einem Server (1), der mit der Recheneinheit in kommunikativer Verbindung steht und einer Anzahl Fahrzeuge, wobei der Server (1) dazu konfiguriert ist, anhand von durch die Recheneinheit an den Server (1) übermittelten Angaben zu einem Kontext eines Nutzers ein autonom fahrendes Fahrzeug aus der Anzahl Fahrzeuge auszuwählen, durch eine Anpassung mindestens einer Komponente ausgewählt aus Infotainmentsystem, Beleuchtungssystem, Beduftungssystem, Karosserie, Motorisierung, Fahrzeugtyp und Fahrzeugdesign anhand einer Zuordnungstabelle, die jeweiligen Steuerbefehlen des Nutzers jeweilige Konfigurationsparameter zuordnet, ein Chassis (11, 12) und/oder eine Karosserie (3, 5, 7, 9) und/oder ein Einstellungsprofiljeweiliger Innenraumkomponenten des Fahrzeugs auszuwählen und das Fahrzeug mit dem ausgewählten Chassis (11, 12) und/oder der ausgewählten Karosserie (3, 5, 7, 9) und/oder dem ausgewählten Einstellungsprofiljeweiliger Innenraumkomponenten des Fahrzeugs unter Verwendung einer automatischen Konfigurationsvorrichtung, die dazu verwendet wird, Komponenten des Fahrzeugs, wie bspw. dessen Karosserie (3, 5, 7, 9) oder dessen Antrieb, auszutauschen, zu konfigurieren und zum Transport des Nutzers zu verwenden, und wobei das Programm dazu konfiguriert ist, den Kontext des Nutzers anhand von durch den Nutzer mittels des auf der Recheneinheit ausgeführten Programms bereitgestellten Steuerbefehlen zu ermitteln.

## Claims

1. Method for transporting a user in an autonomously driving vehicle configured according to a context of the user, comprising providing a context-dependently configured autonomously driving vehicle, in which the autonomously driving vehicle is selected on the basis of information transmitted to a server about a context of the user and is configured by adapting at least one component selected from the infotainment system, lighting system, fragrance system, body, motorization, vehicle type and vehicle design, wherein a chassis (11, 12) and/or a body (3, 5, 7, 9) and/or a setting profile of respective interior components of the vehicle is selected with reference to an assignment table, which assigns respective configuration parameters to respective control commands of the user, and the vehicle is configured with the selected chassis (11, 12) and/or the selected body (3, 5, 7, 9) and/or the selected setting profile of respective interior components of the vehicle using an automatic configuration device, which is used to exchange components of the vehicle, such a, for example its body (3, 5, 7, 9) or its drive, and wherein the context of the user is determined on the basis of control commands provided by the user by means of a program executed on a computing unit.

2. Method according to claim 1, wherein the information about the user's context is transmitted to the server via a secure connection.

3. Method according to claim 1 or 2, wherein an internet browser is selected as the program and the context of the user is determined on the basis of virtual objects stored in a list by the user.

4. Method according to any one of the preceding claims, wherein the context of the user is determined on the basis of user data stored in a digital profile of the user.

5. Method according to claim 3 or 4, wherein the vehicle is configured by means of an assignment table which assigns respective virtual objects viewed and/or selected by the user and/or respective user data from the user's digital profile to respective configuration parameters.

6. Method according to any one of the preceding claims, wherein the vehicle is configured according to a direct command to be provided by the user by means of the program.

7. Method according to claim 6, wherein the direct command is provided by means of a single input to the program executed on the computing unit.

8. Method according to any one of the preceding claims, wherein a browser is selected as the program on which an internet presence of a company is displayed and the vehicle is configured to transport the user from their current position to a representative of the company.

9. Transport system for the context-dependent transport of a user, having a computing unit on which a program is executed, a server (1) which is in communicative connection with the computing unit and a number of vehicles, wherein the server (1) is configured, on the basis of information transmitted by the computing unit to the server (1) regarding a context of a user, to select an autonomously driving vehicle from the number of vehicles, by adapting at least one component selected from the infotainment system, lighting system, fragrance system, body, motorization, vehicle type and vehicle design with reference to an assignment table, which assigns respective configuration parameters to respective control commands of the user, to select a chassis (11, 12) and/or a body (3, 5, 7, 9) and/or a setting profile of respective interior components of the vehicle and to configure the vehicle with the selected chassis (11, 12) and/or the selected body (3, 5, 7, 9) and/or the selected setting profile of respective interior components of the vehicle using an automatic configuration device, which is used to exchange components of the vehicle, such as for example its body (3, 5, 7, 9) or its drive, and to use it to transport the user, and wherein the program is configured to determine the context of the user based on control commands provided by the user by means of the program executed on the computing unit.

## Revendications

1. Procédé de transport d'un utilisateur dans un véhicule à conduite autonome configuré en fonction d'un contexte de l'utilisateur, comprenant la fourniture d'un véhicule à conduite autonome configuré en fonction du contexte, dans lequel le véhicule à conduite autonome est sélectionné à l'aide d'informations relatives à un contexte de l'utilisateur transmises à un serveur et configuré en adaptant au moins un composant sélectionné parmi un système d'infodivertissement, un système d'éclairage, un système de senteur, une carrosserie, une motorisation, un type de véhicule et une conception de véhicule, dans lequel un châssis (11, 12) et/ou une carrosserie (3, 5, 7, 9) et/ou un profil de réglage de composants d'habitacle respectifs du véhicule sont sélectionnés à l'aide d'une table d'affectation qui affecte des paramètres de configuration respectifs à des instructions de commande respectives de l'utilisateur, et le véhicule est configuré avec le châssis sélectionné (11, 12) et/ou la carrosserie sélectionnée (3, 5, 7, 9) et/ou le profil de réglage sélectionné de composants d'habitacle respectifs du véhicule en utilisant un dispositif de configuration automatique qui est utilisé pour remplacer des composants du véhicule tels que sa carrosserie (3, 5, 7, 9) ou sa transmission, et dans lequel le contexte de l'utilisateur est déterminé à l'aide d'instructions de commande fournies par l'utilisateur au moyen d'un programme exécuté sur une unité de calcul.

2. Procédé selon la revendication 1, dans lequel les informations relatives au contexte de l'utilisateur sont transmises au serveur par l'intermédiaire d'une connexion sécurisée.

3. Procédé selon la revendication 1 ou 2, dans lequel un navigateur Internet est sélectionné en tant que programme et le contexte de l'utilisateur est déterminé à l'aide d'objets virtuels stockés dans une liste par l'utilisateur.

4. Procédé selon l'une quelconque des revendications précédentes, dans lequel le contexte de l'utilisateur est déterminé à l'aide de données d'utilisateur enregistrées dans un profil numérique de l'utilisateur.

5. Procédé selon la revendication 3 ou 4, dans lequel le véhicule est configuré au moyen d'une table d'affectation qui affecte des objets virtuels respectifs observés et/ou sélectionnés par l'utilisateur et/ou des données utilisateur respectives issues du profil numérique de l'utilisateur à des paramètres de configuration respectifs.

6. Procédé selon l'une quelconque des revendications précédentes, dans lequel le véhicule est configuré en fonction d'une instruction directe à fournir par l'utilisateur au moyen du programme.

7. Procédé selon la revendication 6, dans lequel l'instruction directe est fournie au moyen d'une seule entrée dans le programme exécuté sur l'unité de calcul.

8. Procédé selon l'une quelconque des revendications précédentes, dans lequel un navigateur est sélectionné en tant que programme, sur lequel une présence Internet d'une entreprise est représentée et le véhicule est configuré pour transporter l'utilisateur de sa position actuelle à une représentation de l'entreprise.

9. Système de transport pour le transport dépendant du contexte d'un utilisateur, avec une unité de calcul sur laquelle un programme est exécuté, un serveur (1) qui est en liaison communicative avec l'unité de calcul et un certain nombre de véhicules, dans lequel le serveur (1) est configuré pour sélectionner, à l'aide d'informations relatives à un contexte d'un utilisateur transmises par l'unité de calcul au serveur (1), un véhicule à conduite autonome parmi le nombre de véhicules, en adaptant au moins un composant sélectionné parmi un système d'infodivertissement, un système d'éclairage, un système de senteur, une carrosserie, une motorisation, un type de véhicule et une conception de véhicule à l'aide d'une table d'affectation qui affecte des paramètres de configuration respectifs à des instructions de commande respectives de l'utilisateur, pour sélectionner un châssis (11, 12) et/ou une carrosserie (3, 5, 7, 9) et/ou un profil de réglage de composants d'habitacle respectifs du véhicule, et pour configurer le véhicule avec le châssis sélectionné (11, 12) et/ou la carrosserie sélectionnée (3, 5, 7, 9) et/ou le profil de réglage sélectionné de composants d'habitacle respectifs du véhicule en utilisant un dispositif de configuration automatique qui est utilisé pour remplacer des composants du véhicule tels que sa carrosserie (3, 5, 7, 9) ou sa transmission, et l'utiliser pour transporter l'utilisateur, et dans lequel le programme est configuré pour déterminer le contexte de l'utilisateur à l'aide des instructions de commande fournies par l'utilisateur au moyen du programme exécuté sur l'unité de calcul.
